# EUROPEAN PATENT APPLICATION

(11) **EP 2 360 554 A1**
(43) Date of publication of application: **24.08.2011**
(21) Application number: 09827173.7
(22) Date of filing: 17.11.2009
(51) Int. Cl.: G06F 3/033

(54) **MOUSE**

(30) Priority: 18.11.2008 CN 200810217480
(71) Applicant: Aigo Digital Technology Co., Ltd, Beijing 100080 (CN); Lin, William, Beijing 100080 (CN)
(72) Inventor: LIN, William, Beijing 100080 (CN)
(74) Representative: Dini, Roberto
(86) International application number: PCT/CN2009/074971
(87) International publication number: WO 2010/057424

(57) **Abstract**

A mouse comprises a base (100), function keys (110) arranged on the base (100), an optical transmitting and receiving device (300) used for transmitting and receiving data information and a finger-back pressure plate (200) movably connected with the base (100). The mouse is small, convenient to carry and operate.

## Description

### FIELD OF THE TECHNOLOGY

The present invention relates to a mouse.

### BACKGROUND

With development of computers, small and portable mice are gaining more and more popularity in the market. However, it is often inconvenient to operate mice that are too small. When a user operates a mouse, he/she needs to not only operate functional keys but also control movements of the mouse. Excessively small mice can often only accomplish operation by means of strength of fingers of the user, and this easily causes fatigue of the user and malfunctions.

To solve the aforementioned problem, China Patent ZL200720119517.8 "Fingerstall Type Mouse" discloses a small mouse, in which a body of the mouse is a small flat board and for convenience of operating the mouse by a user, a fixed shell is disposed on the flat board to cover fingers of an operating hand of the user so as to facilitate the user to accomplish moving and positioning of the mouse. However, the fingerstall shell that is fixedly disposed not only adds the volume of the mouse but also makes it difficult for most of users to comfortably and conveniently operate the mouse because fingers of the users are often much different from each other in thickness.

### SUMMARY

The technical problem to be solved by the present invention is to provide a mouse that has a small volume and is convenient to operate.

The objective of the present invention is achieved through the following technical solution:

The present invention provides a mouse comprising a base, functional keys disposed on the base, and an optical transmitting and receiving device configured to transmit and receive data information, wherein the mouse further comprises a finger-back pressure plate movable connecting to the base.

Through the aforesaid technical solution, when a user uses the optical mouse, the finger-back pressure plate hinged with the base is opened to press the finger-back of an operating hand. In this way, when moving the optical mouse, the user can easily and conveniently operate the optical mouse without applying a too large force thereon by means of his/her fingers.

To further improve cooperation between the operating hand of the user and the finger-back pressure plate, in some embodiments provided by the present invention, the finger-back pressure plate is formed with a finger-back through-hole thereon. When the user operates the mouse and the finger-back of the operating hand is pressed by the finger-back pressure plate, a finger-back portion of the operating hand corresponds to the finger-back through-hole. In this way, when the finger-back pressure plate is rotated at a certain angle relative to the base and presses the finger-back of the operating hand of the user, an arched portion of the finger-back of the operating hand passes through the finger-back through-hole. Thus, the finger-back through-hole 210 also provides a certain force for moving the mouse.

In some embodiments provided by the present invention, the mouse may further have the following characteristics:

In order to facilitate the user to operate the mouse even when the finger-back pressure plate is not opened, functional key through-holes are formed at positions on the finger-back pressure plate corresponding to the functional keys. Thus, when the finger-back pressure plate is closed, the user controls the functional keys via the functional key through-holes by means of the fingers of the operating hand so as to use the mouse.

Protrusions are disposed on the functional keys for increasing sensitivity and a friction force between the fingers of the operating hand and the functional keys.

A cushion is disposed at the side of the finger-back pressure plate corresponding to the finger-back.

The finger-back pressure plate is rotatably connected to the base.

The finger-back pressure plate is movably connected to the base via a pressure plate hinge disposed between the base and the pressure plate; the functional keys are disposed at the side of the base adjacent to the pressure plate hinge, and the functional keys include a left functional key and a right functional key. The mouse can be operated by either a left hand or a right hand. The aforesaid hinge connection may also be replaced with a pivot connection, a detachable connection and the like.

The mouse further comprises a scroll wheel disposed at a side of the base, and the scroll wheel is a scroll gear wheel, a rough-surface wheel or a sliding touch key.

The optical transmitting and receiving device comprises a light source, an optical system mirror and a reflected-light receiving device provided with an optical lens, which are disposed in an optical component case; and light emitted by the light source is irradiated to a reflecting surface through the optical system mirror, then reflected by the reflecting surface and received by the reflected-light receiving device.

The mouse further comprises the optical component case, at least the light source, the optical system mirror or the reflected-light receiving device of the optical transmitting and receiving device are contained in the optical component case, and the optical component case is movably connected with the base. In this way, when the optical component case is rotated at a certain angle relative to the base, a distance between the optical transmitting and receiving device and the reflecting surface is increased, thereby improving a resolution ratio and sensitivity of the mouse.

The reflecting surface is often a surface that supports the mouse to move thereon.

The reflected-light receiving device often has a lens. When the optical component case is received in the optical component case groove within the base, the lens of the reflected-light receiving device and the reflecting surface have a small distance there-between, and a focal length of the lens often extends beyond the reflecting surface actually, resulting in an unsatisfactory focusing effect. However, when the optical component case is rotated at a certain angle relative to the base and has an increased distance from the reflecting surface, the area irradiated by the light source through the optical system mirror is increased and the reception focusing effect and the resolution ratio are improved. Of course, an optical system having a short focal length may also be employed to solve the aforesaid technical problem that the optical component requires to be moved to increase the distance from the reflecting surface.

The light source is an electronic component that emits visible light, infrared light or laser light.

At a position on the base corresponding to the optical component case is formed an optical component case groove for accommodating the optical component case.

The mouse may be connected in a wireless or wired way. When the mouse is connected in the wireless way, the mouse comprises a wireless transmitting device and a wireless receiving device. The wireless receiving device is pluggable into and removable from a computer via for example a USB interface and is configured to be wirelessly connected between the mouse and the computer. Some computers may already have a wireless receiving system (e.g., a Bluetooth system) built therein, and can be wirelessly connected with this mouse. The mouse is formed with a wireless receiving device groove for receiving the wireless receiving device. The wireless transmitting device is connected with a circuit board of the mouse.

The wireless connection can be accomplished by using infrared light, high-frequency radio, Bluetooth and the like.

Of course, the mouse of the present invention may also be connected with the computer in the wired way.

Compared to the prior art, the present invention has the following advantages: the mouse is more convenient to operate while being small in volume and portable; meanwhile, there is no need to additionally apply a down force, thereby avoiding malfunctions and allowing the user to use the mouse easily for a long time.

### BRIEF DESCRIPTION OF THE DRAWINGS

Fig. 1 is a schematic structure view of a mouse according to an embodiment of the present invention viewed from the left;

Fig. 2 is a schematic structure view of the mouse according to the embodiment of the present invention viewed from the right;

Fig. 3 is a schematic structure view of the mouse according to the embodiment of the present invention when an optical component case is received onto a base;

Fig. 4 is a schematic structure view of the mouse according to the embodiment of the present invention when a finger-back pressure plate is closed;

Fig. 5 is a schematic structure view of the mouse according to the embodiment of the present invention when the finger-back pressure plate is closed and the optical component case is rotated upward;

Fig. 6 is a side cross-sectional view of the mouse according to the embodiment of the present invention when the finger-back pressure plate is closed;

Fig. 7 is a side cross-sectional view of the mouse according to the embodiment of the present invention when the finger-back pressure plate is rotated upward;

Fig. 8 is a bottom view of the mouse according to the embodiment of the present invention;

Fig. 9 is a schematic view illustrating how the mouse according to an embodiment of the present invention using a scroll gear wheel is operated by a user when the finger-back pressure plate is closed;

Fig. 10 is a schematic view illustrating how the mouse according to an embodiment of the present invention using a sliding touch key is operated by the user when the finger-back pressure plate is closed;

Fig. 11 is a side view of the mouse according to an embodiment of the present invention being operated by the user when the finger-back pressure plate is closed and the optical component case is received onto the base;

Fig. 12 is a side view of the mouse according to an embodiment of the present invention being operated by the user when the finger-back pressure plate is rotated upward and the optical component case is rotated upward;

Fig. 13 is a schematic block diagram of a circuit of the mouse according to an embodiment of the present invention; and

Fig. 14 is a schematic block diagram of a circuit of a wireless receiving device of the mouse according to an embodiment of the present invention.

In the drawings:

| | |
|---|---|
| 100: Base | 110: Functional key |
| 111: Left functional key | 112: Right functional key |
| 120: Scroll wheel | 121: Scroll gear wheel |
| 122: Sliding touch key | 200: Finger-back pressure plate |
| 210: Finger-back through-hole | 211: Functional key through-hole |
| 220: Pressure plate hinge | 201: Pressure plate cushion |
| 300: Optical transmitting and receiving device | |
| 320: Optical part hinge | 310: Optical component case |
| 330: Reflected-light receiving device | 341: Optical system mirror |
| 342: Light source | 311: Optical component case groove |
| 400: Wireless receiving device | 401: Wireless receiving device groove |
| 402: Mouse circuit board and wireless transmitting device | |
| 800: Reflecting surface | 900: Mouse micro-processing unit |
| 901: Command input unit (comprising keys and the like) | |
| 902: Power source | 903: Port |
| 904: USB link | 905: Infrared transmitting device |
| 4001: Wireless receiving circuit device | |
| 408: Wireless transmitting device | 9001: Reception micro-processing unit |
| 9031: Input/output port (USB) | 9051: Infrared receiving device |

### DETAILED DESCRIPTION

Hereinafter, the present invention will be further described with reference to the attached drawings and preferred embodiments.

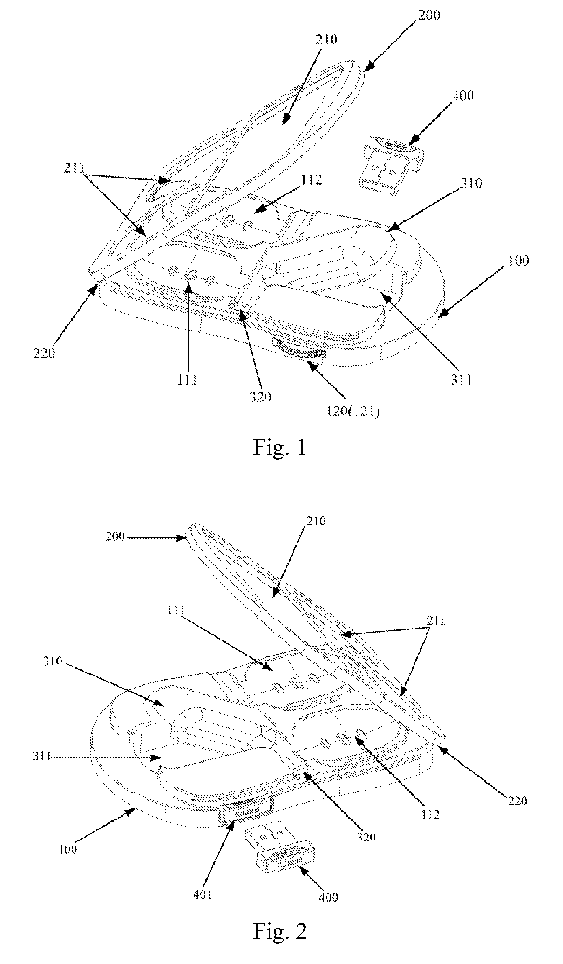

As shown in Fig. 1, Fig. 2 and Fig. 8, a mouse comprises: a base 100, a left functional key 111 and a right functional key 112 disposed on the base 100, an optical transmitting and receiving device 300 configured to transmit and receive data information, and a finger-back pressure plate 200. The finger-back pressure plate 200 is hinged with the base 100 via a pressure plate hinge 220 disposed at a side of the base 100.

The finger-back pressure plate 200 is formed with a finger-back through-hole 210 thereon. When a user holds the mouse and fingers of an operating hand are pressed by the finger-back pressure plate 200, the finger-back of the operating hand passes through the finger-back through-hole 210. Functional key through-holes 211 are formed at positions on the finger-back pressure plate 200 corresponding to the left functional key 111 and the right functional key 112.

A pressure plate cushion 201 is disposed on a surface where the finger-back pressure plate 200 makes contact with the base 100. The cushion can be made of a soft object such as sponge.

The optical transmitting and receiving device 300 comprises a light source 342, an optical system mirror 341 and a reflected-light receiving device 330, which are disposed within an optical component case 310. Light emitted by the light source 342 is reflected to a reflecting surface 800 through the optical system mirror 341, then reflected by the reflecting surface 800 and received by the reflected-light receiving device 330.

All or some components of the aforementioned components e.g., the light source 342, the optical system mirror 341 or the reflected-light receiving device of the optical transmitting and receiving device 300 can be selected to be assembled in the optical component case 310. The optical component case 310 is hinged with the base 100 via an optical part hinge 320 disposed on the base 100, e.g., to be disposed on the middle of the base. At a position on the base 100 corresponding to the optical component case 310 is formed an optical component case groove 311 for accommodating the optical component case 310 when there is a need.

According to the present embodiment of the present invention, the mouse can be connected to a computer in a wireless way, so the mouse further comprises a wireless receiving device 400, and the receiving device 400 can use radio, infrared light or Bluetooth. The wireless receiving device 400 is pluggable into and removable from the computer via a USB interface or any other interface such as IEEE 1394 interface and is configured to be wirelessly connected between the mouse and the computer. A wireless receiving device groove 401 is disposed at a side of the mouse for receiving the wireless receiving device 400. Alternatively, the wireless receiving device groove 401 can also be disposed at any other position, e.g., the bottom, the top and the like, of the base 100.

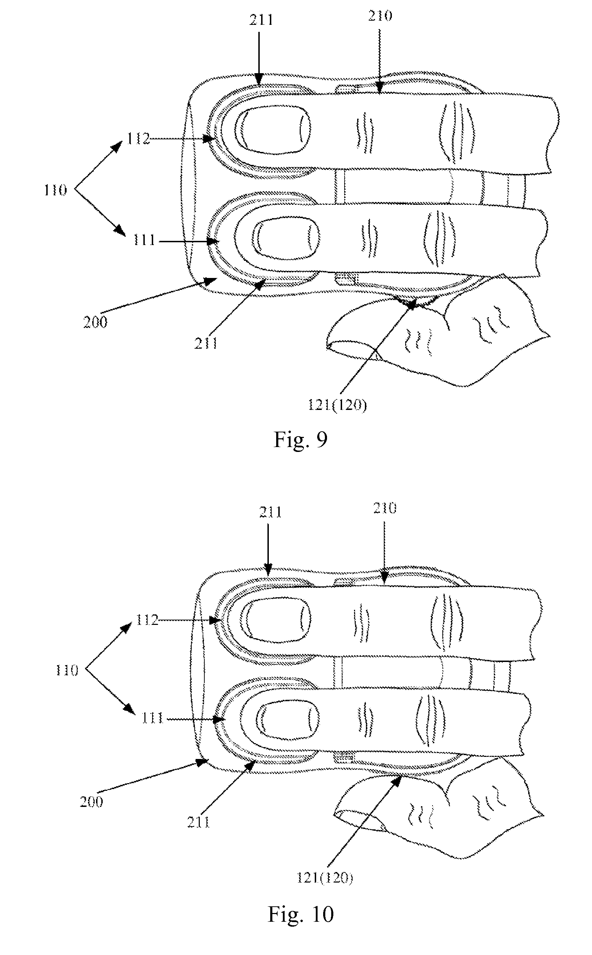

A scroll wheel 120 is disposed at a side of the base 100. The scroll wheel 120 can be a scroll gear wheel 121, and the gear can also be made of a rough-surface scroll wheel, alternatively, the scroll wheel 120 can also be a sliding touch key 122 as shown in Fig. 10.

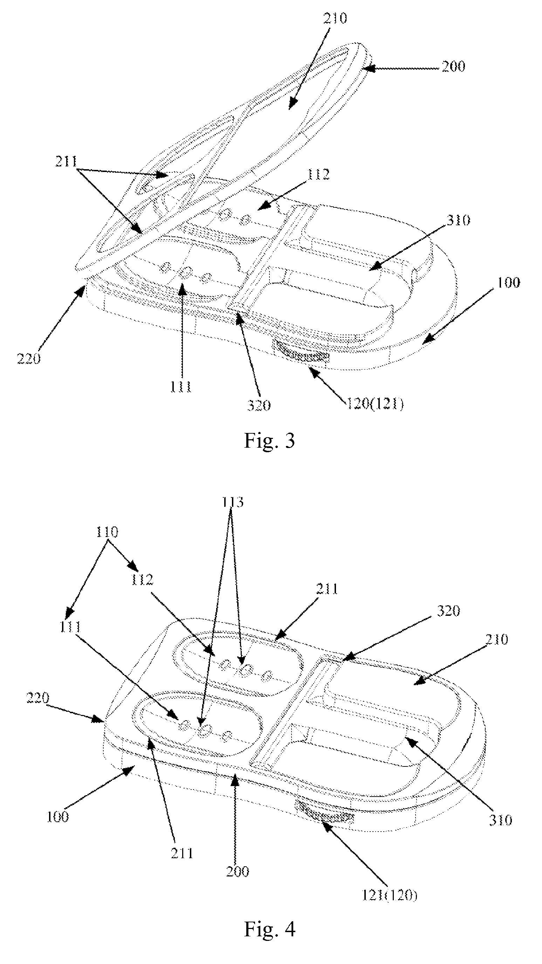

As shown in Fig. 3, different from Fig. 1, the optical component case 310 of the mouse here is received in the optical component case groove 311 within the base 100.

As shown in Fig. 4, the finger-back pressure plate 200 is closed on the base 100. Functional keys 110 include the left functional key 111 and the right functional key 112. Striped protrusions are disposed on the surfaces of the left functional key 111 and the right functional key 112 for increasing sensitivity and a friction force between the fingers of the operating hand and the functional keys 110. Alternatively, the protrusions can also to be a dotted shape, a patterned shape and the like.

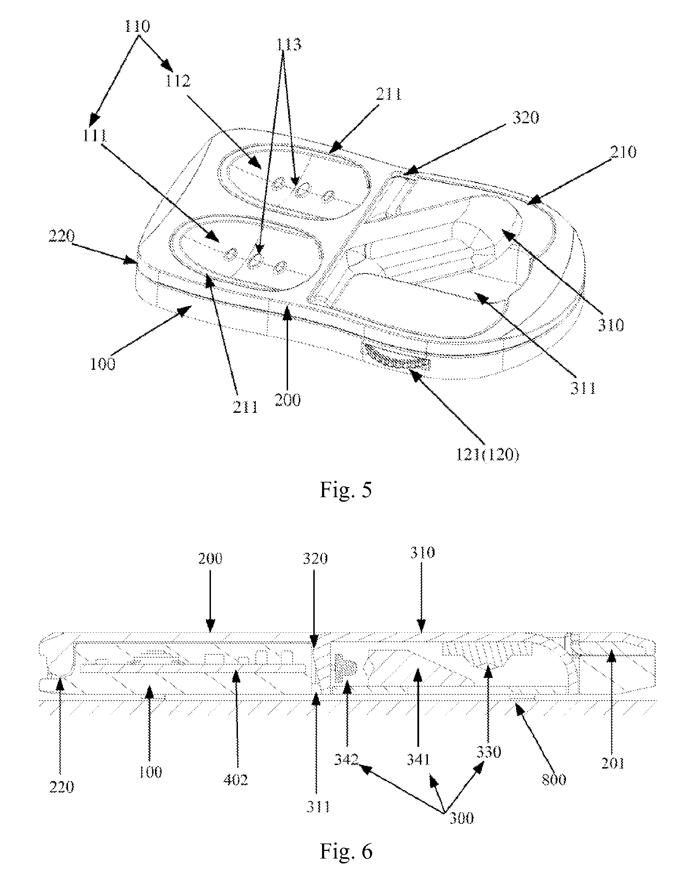

As shown in Fig. 5, different from Fig. 4, when the finger-back pressure plate 200 is closed on the base 100, the optical component case 310 passes through the finger-back through-hole 210 and is rotated at a certain angle relative to the base 100.

As shown in Fig. 6, the finger-back pressure plate 200 is closed on the base 100, and the optical component case 310 is also received onto the base 100 and accommodated within the optical component case groove 311.

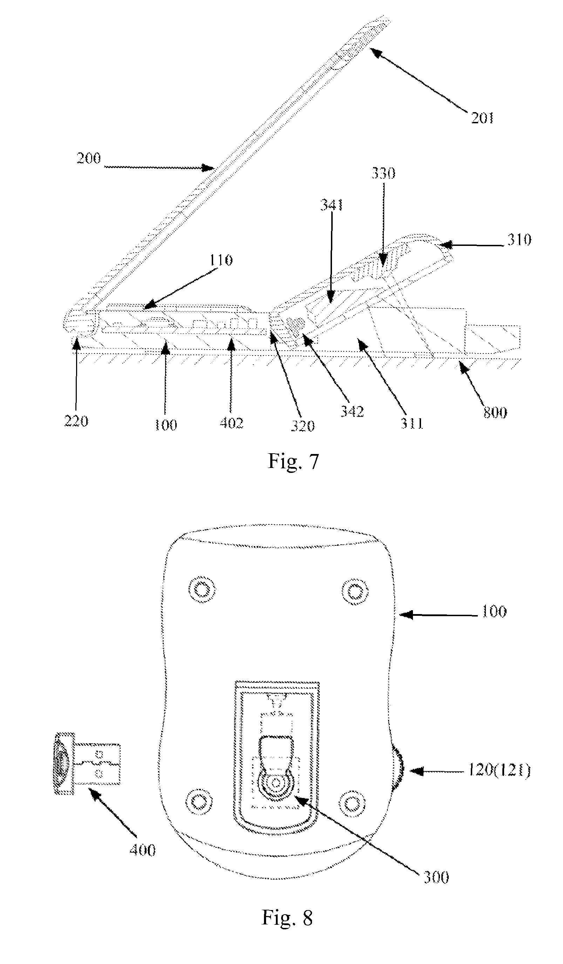

As shown in Fig. 7, different from Fig. 6, the optical component case 310 is rotated at a certain angle relative to the base 100. The distance between the optical system mirror 341 and the reflecting surface 800 is increased, so it contributes to improvement of a resolution ratio and sensitivity of the mouse.

As shown in Fig. 9 to Fig. 11, when the finger-back pressure plate 200 is closed on the base, two fingers of the operating hand of the user pass through the functional key through-holes 211 on the finger-back pressure plate 200 to hold down the left functional key 111 and the right functional key 112 respectively, and the thumb of the operating hand controls the scroll wheel 120 disposed at a side of the base 100. The scroll wheel 120 is the scroll gear wheel 121.

As shown in Fig. 10, different from Fig. 9, the scroll wheel 120 is the sliding touch key 122.

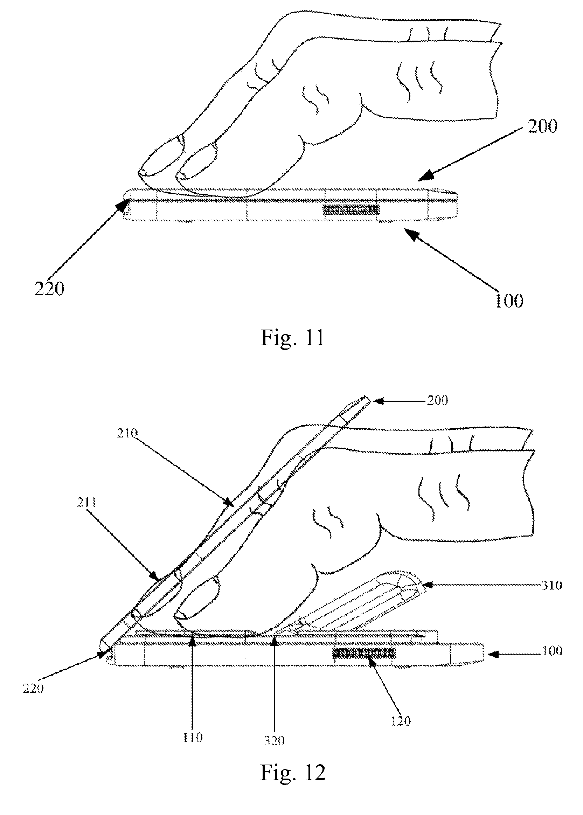

As shown in Fig. 12, there is shown a preferred working status of the mouse of the present invention. The finger-back pressure plate 200 is rotated at a certain angle relative to the base to press the finger-back of the operating hand of the user, and an arched portion of the finger-back of the operating hand passes through the finger-back through-hole 210. The optical component case 310 is rotated at a certain angle relative to the base 100, and it contributes to improvement of the resolution ratio and the sensitivity of the mouse.

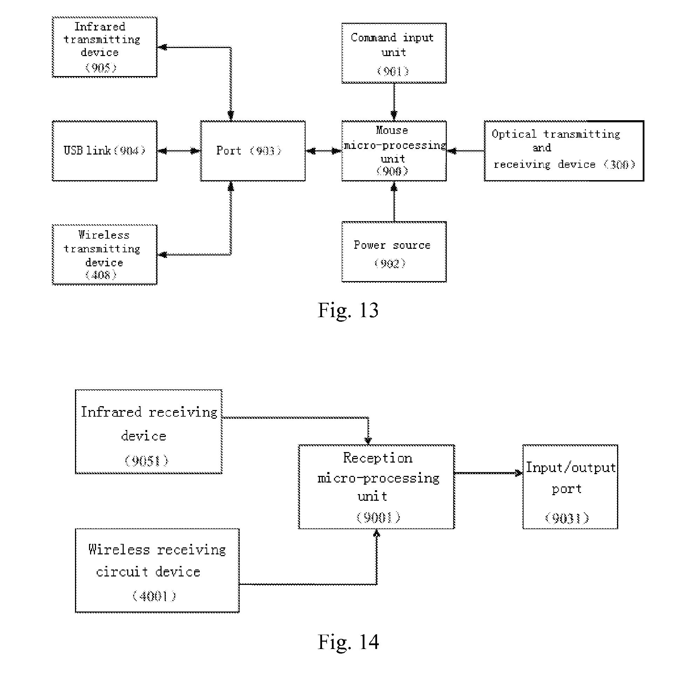

As shown in Fig. 13, there is shown a schematic structure view of a circuit of the mouse according to an embodiment of the present invention. A power source 902 supplies power to a mouse micro-processing unit 900. The mouse micro-processing unit 900 receives and processes a command inputted by the user through a command input unit 901 and a data signal inputted by the optical transmitting and receiving device 300, and exchanges data with an external apparatus via a port 903. The command input unit 901 comprises the functional keys 110 and the scroll wheel 120. The port 903 can be connected with the external apparatus via an infrared transmitting device 905, a wireless transmitting device 408 or a USB link 904.

Fig. 14 is a schematic block diagram of the wireless receiving device 400 of the mouse according to an embodiment of the present invention. Data is received by a receiving unit, e.g., an infrared receiving device 9051 or a wireless receiving circuit device 4001, then processed by a reception micro-processing unit 9001, e.g., a DSP or any other digital processing unit, and further to be transmitted to the computer via an input/output port 9031, e.g., a USB interface.

The present invention has been further detailed with reference to the preferred embodiments in the above descriptions; however, implementation of the present invention is not only limited thereto. Many deductions or replacements may be made by those of ordinary skill in the art without departing from the conception of the present invention. All the deductions or replacements shall be considered as being covered within the protection scope of the present invention.

## Claims

1. A mouse, comprising a base (100), functional keys (110) disposed on the base (100), and an optical transmitting and receiving device (300) configured to transmit and receive data information, wherein the mouse further comprises a finger-back pressure plate (200) movable connecting to the base (100).

2. The mouse of Claim 1, wherein the finger-back pressure plate (200) is formed with a finger-back through-hole (210) thereon, when a user operates the mouse and an operating hand is pressed by the finger-back pressure plate (200), a finger-back portion of the operating hand corresponds to the finger-back through-hole (210).

3. The mouse of Claim 2, wherein functional key through-holes (211) are formed at positions on the finger-back pressure plate (200) corresponding to the functional keys (110).

4. The mouse of Claim 1, wherein protrusions (113) are disposed on the functional keys (110) for increasing a friction force between fingers of the operating hand and the functional keys (110).

5. The mouse of Claim 1, 2, 3 or 4, wherein the finger-back pressure plate (200) is rotatably connected to the base (100) and the finger-back pressure plate (200) is rotatable relative to the base (100).

6. The mouse of Claim 1, 2, 3 or 4, wherein the finger-back pressure plate (200) is movably connected to the base (100) via a pressure plate hinge (220) disposed between the base (100) and the pressure plate (200); and the functional keys (110) are disposed at the side of the base (100) adjacent to the pressure plate hinge (220), and the functional keys (110) include a left functional key (111) and a right functional key (112).

7. The mouse of Claim 1, wherein the mouse further comprises a scroll wheel (120) disposed at a side of the base (100), and the scroll wheel (120) is a scroll gear wheel (121), a rough-surface wheel, or a sliding touch key (122).

8. The mouse of Claim 1, wherein the optical transmitting and receiving device (300) comprises a light source (342), an optical system mirror (341) and a reflected-light receiving device (330); and light emitted by the light source (342) is irradiated to a reflecting surface (800) through the optical system mirror (341), then reflected by the reflecting surface (800) and received by the reflected-light receiving device (330).

9. The mouse of Claim 8, wherein the mouse further comprises an optical component case (310), at least the light source (342), the optical system mirror (341) and the reflected-light receiving device (330) of the optical transmitting and receiving device (300) are received in the optical component case (310), and the optical component case (310) is movably connected with the base (100).

10. The mouse of Claim 8, wherein the optical component case (310) is movably connected with the base (100) via a hinge (320) disposed between the base (100) and the optical component case (310).

11. The mouse of Claim 8, wherein the light source (342) is an electronic component that emits visible light, infrared light or laser light.

12. The mouse of Claim 8, 9, 10 or 11, wherein at a position on the base (100) corresponding to the optical component case (310) is formed an optical component case groove (311) for accommodating the optical component case (310).

13. The mouse of Claim 1, wherein the mouse comprises a wireless receiving device (400), the wireless receiving device (400) is pluggable into and removable from a computer and is configured to be wirelessly connected between the mouse and the computer, and the mouse is formed with a wireless receiving device groove (401) for receiving the wireless receiving device (400).

14. The mouse of Claim 1, further comprises a pressure plate cushion (201) disposed at a side of the finger-back pressure plate (200) corresponding to the finger-back.
